# NEUE EUROPÄISCHE PATENTSCHRIFT

(11) **EP 2 086 372 B2**
(45) Veröffentlichungstag und Bekanntmachung des Hinweises auf die Entscheidung über den Einspruch: **05.07.2017**
(45) Hinweis auf die Patenterteilung: 01.12.2010
(21) Anmeldenummer: 07815138.8
(22) Anmeldetag: 04.10.2007
(51) Int. Cl.: A47B 88/457

(54) **ANTRIEBSVORRICHTUNG FÜR BEWEGLICHE MÖBELTEILE**
DRIVE APPARATUS FOR MOBILE FURNITURE PARTS
DISPOSITIF D'ENTRAÎNEMENT POUR DES ÉLÉMENTS MOBILES DE MEUBLES

(30) Priorität: 23.10.2006 AT 17692006
(43) Veröffentlichungstag der Anmeldung: 12.08.2009
(73) Patentinhaber: Julius Blum GmbH, 6973 Höchst (AT)
(72) Erfinder: HAUER, Christian, 6912 Hörbranz (AT)
(74) Vertreter: Torggler & Hofinger Patentanwälte
(86) Internationale Anmeldenummer: PCT/AT2007/000471
(87) Internationale Veröffentlichungsnummer: WO 2008/049141

(56) Entgegenhaltungen:
- EP-A- 1 710 380
- WO-A-2004/100717
- DE-A1- 10 305 291
- FR-A- 2 476 193
- US-A- 3 005 672
- SASS F. ET AL: 'DUBBEL Taschenbuch für den Maschinenbau', Bd. 13. AUFL, 1974, SPRINGER VERLAG, BERLIN Seite 750

## Beschreibung

Die vorliegende Erfindung bezieht sich auf ein Möbel mit einer Antriebsvorrichtung für bewegbare Möbelteile mit einer elektrischen Antriebseinheit und einer Kupplungsvorrichtung zur zumindest zeitweiligen Übertragung der Kraft der elektrischen Antriebseinheit auf das bewegbare Möbelteil, wobei die Kupplungsvorrichtung einen Antrieb und einen Abtrieb aufweist und zwischen dem Antrieb und dem Abtrieb Kupplungselemente wirksam sind.

Der Einsatz derartiger Antriebsvorrichtungen für ein bewegbares Möbelteil mit einem elektrischen Motor und einer Kupplung ist gemäß dem Stand der Technik seit langem bekannt. Häufig werden diese Kupplungen als Überlastsicherungen ausgeführt, die bei Erreichen oder Überschreiten eines vorgegebenen maximalen Drehmomentes vom elektrischen Antrieb abkuppeln. Im Falle eines Defektes stellen Motoren durch die ihnen innewohnende Hemmung ein Hindernis für eine manuelle Bedienung dar, sodass das bewegbare Möbelteil bis zur Reparatur nicht zu gebrauchen ist. Darüber hinaus wird die Geschwindigkeit des angetriebenen Möbelteiles durch die Geschwindigkeit des elektrischen Antriebs vorgegeben, was oft als Nachteil empfunden wird, da vielmehr eine Handhabung des bewegbaren Möbelteiles entsprechend dem Arbeitstempo des jeweiligen Benutzers erwünscht ist.

Aus der EP 1 710 380 A1 ist eine Antriebsvorrichtung für Schubladen bekannt geworden, wobei ein Motor über ein Motorgetriebe auf eine Antriebswelle einer Kupplungsvorrichtung wirkt. Die Kupplung ist als elektrische Kupplung ausgeführt, wobei bei einer elektrischen Versorgung des Motors gleichzeitig auch die elektrische Kupplung geschlossen wird. Wird hingegen die Stromzufuhr zum Motor unterbrochen, so ist auch die Kupplung aufgrund des Fehlens elektrischer Energie offen, sodass die Schublade bei stillstehendem Motor manuell bewegt werden kann.

Die DE 103 05 291 A1 beschreibt eine Verfahreinheit für Schubladen mit einer permanentmagnetischen Stirndrehkupplung, um wahlweise ein automatisches oder ein handbetriebenes Ein- und Ausfahren der Schublade zu ermöglichen. Bei einer Überlast wird ein antriebsseitiger Kupplungsteil um ein Ausrastmaß zurückversetzt, wodurch die Kupplung ausrastet und der Auszug stoppt.

Aufgabe der vorliegenden Erfindung ist es, ein Möbel mit einer Antriebsvorrichtung der eingangs erwähnten Gattung anzugeben, die die Vorteile eines elektrischen Antriebs mit den Vorteilen einer manuellen Bedienbarkeit günstig verbindet.

Dies wird erfindungsgemäß durch die Merkmale des Anspruchs 1 erreicht.

Die vorgeschlagene - vorzugsweise nur mechanisch funktionierende - Kupplung gestattet es, in der ersten Betriebsstellung die Kräfte von der elektrischen Antriebseinheit auf die Abtriebswelle und damit auf das bewegbare Möbelteil zu übertragen, wobei das bewegbare Möbelteil über die elektrische Antriebseinheit bewegbar ist. In der zweiten Betriebsstellung der Kupplungsvorrichtung ist es möglich, den Abtrieb und damit das bewegbare Möbelteil von der elektrischen Antriebseinheit zu trennen, wobei zusätzlich eine ungestörte manuelle Bedienung des bewegbaren Möbelteils ermöglicht wird. Dabei ist zweckmäßigerweise vorgesehen, dass die zweite Betriebstellung auch während der ersten Betriebsstellung der Kupplungsvorrichtung aktivierbar ist, dh dass das bewegbare Möbelteil auch während der angetriebenen Bewegung in der von der Antriebsvorrichtung vorgegebenen Bewegungsrichtung manuell bewegbar ist. Auf diese Weise ist das angetriebene bewegbare Möbelteil mit einer höheren Geschwindigkeit als mit der von der elektrischen Antriebseinheit vorgegebenen Geschwindigkeit bewegbar.

Gemäß einem Ausführungsbeispiel der Erfindung kann vorgesehen sein, dass der Antrieb und der Abtrieb relativ zueinander verdrehbar und vorzugsweise zueinander koaxial angeordnet sind.

Eine vorteilhafte Ausführungsform der Erfindung ergibt sich dadurch, dass in beiden Drehrichtungen der elektrischen Antriebseinheit durch die Kupplungsvorrichtung automatisch eine mechanische Kupplung zwischen Antrieb und Abtrieb herstellbar ist.

Bei einer weiteren vorteilhaften Ausführungsform der Erfindung kann vorgesehen sein, dass der Abtrieb ausgehend von einem ausgekuppelten Zustand zwischen Antrieb und Abtrieb in beiden Drehrichtungen frei bewegbar ist. Im Stillstand der elektrischen Antriebseinheit ist die Kupplung vorzugsweise "ausgeschaltet", d.h. es werden keine Kräfte zwischen Motor und Abtrieb übertragen, sodass der Kraftstrang zwischen Motor und Abtrieb unterbrochen ist. Auf diese Weise ist eine ungestörte manuelle Bedienung des bewegbaren Möbelteiles zwischen dessen Endlagen möglich.

Bei einer zweckmäßigen Ausgestaltung der Erfindung kann vorgesehen sein, dass der Abtrieb ausgehend von einem eingekuppelten Zustand zwischen Antrieb und Abtrieb - beispielsweise manuell - in eine in Richtung der von der Antriebseinheit ausgeübten Drehrichtung bewegbar ist, sofern der Abtrieb rascher als der Antrieb bewegt ist. Auf diese Weise kann der Benutzer das bewegbare Möbelteil - beispielsweise durch eine unterstützende manuelle Bewegung - mit einer höheren als die von der Antriebsvorrichtung vorgegebenen Geschwindigkeit bewegt werden.

Günstigerweise weist die elektrische Antriebseinheit wenigstens einen elektrischen Motor auf, der vorzugsweise in zwei Drehrichtungen schaltbar ist.

Gemäß einem bevorzugten Ausführungsbeispiel der Erfindung kann vorgesehen sein, dass die hergestellte Klemmverbindung lösbar ist, indem der elektrische Antrieb nach einem Stopp in einer Drehrichtung innerhalb eines vorgegebenen Winkelbereiches (vorzugsweise geringfügig, ca. 2° bis 6°) in die entgegen gesetzte Drehrichtung bewegt wird.

Bei einer bevorzugten Ausführungsform ist das bewegbare Möbelteil als eine relativ zu einem Möbelkorpus verfahrbare Schublade ausgebildet. Alternativ kann jedoch auch vorgesehen sein, dass das bewegbare Möbelteil eine um eine Achse verschwenkbare Klappe oder Möbeltüre ist.

Weitere Einzelheiten und Vorteile der vorliegenden Erfindung werden anhand der nachfolgenden Figurenbeschreibung erläutert. Darin zeigt bzw. zeigen:
- Fig. 1: eine schematische perspektivische Darstellung einer relativ zu einem Möbelkorpus verfahrbaren Schublade mit einer erfindungsgemäßen Antriebsvorrichtung,
- Fig. 2: eine perspektivische Darstellung der Antriebsvorrichtung gemäß Fig. 1,
- Fig. 3a, 3b: eine Explosionsdarstellung der Kupplungsvorrichtung sowie eine perspektivische Ansicht derselben im zusammengebauten Zustand,
- Fig. 4a, 4b: eine teilweise aufgebrochene Frontansicht der ungekuppelten Kupplungsvorrichtung sowie ein Vertikalschnitt derselben,
- Fig. 5a, 5b: eine teilweise aufgebrochene Frontansicht der gekuppelten Kupplungsvorrichtung sowie ein Vertikalschnitt derselben,
- Fig. 6a, 6b: eine teilweise aufgebrochene Frontansicht sowie eine vergrößerte Detaildarstellung mit in einer Drehrichtung gekuppelten Kupplungsvorrichtung,
- Fig. 7a, 7b: eine analoge Darstellung zu Fig. 6a, 6b mit einer in der entgegengesetzten Drehrichtung gekuppelten Kupplungsvorrichtung,
- Fig. 8a, 8b: eine analoge Darstellung gemäß den Fig. 6a bis 7b, wobei der Kraftschluss der Kupplungselemente aufgehoben ist, und
- Fig. 9: eine schematische Perspektivansicht der Kupplungsvorrichtung mit einer beispielhaften Bremsvorrichtung zur Erzielung eines vorgegebenen Schwellwertes des Kupplungsvorganges.

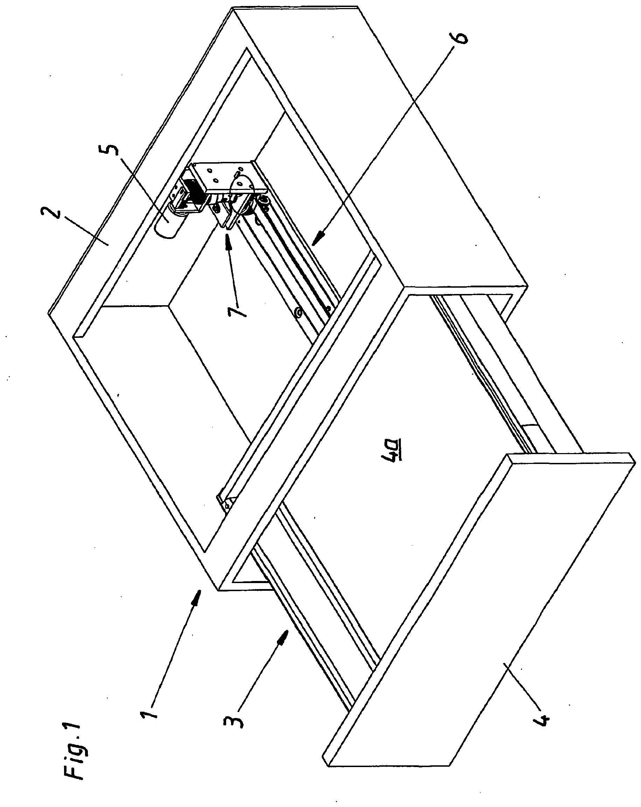

Fig. 1 zeigt eine perspektivische Ansicht eines Möbels 1 mit einem bewegbaren Möbelteil 3 in Form einer verfahrbaren Schublade 4. Aufgrund der rein schematischen Darstellung sind die üblicherweise vorgesehenen Ausziehführungen für die Schublade 4, die auf beiden gegenüberliegenden Seitenwänden des Möbelkorpus 2 zu befestigen sind, nicht dargestellt. Zum Bewegen der Schublade 4 von einer Schließ- in eine Offenstellung bzw. in die umgekehrte Richtung ist eine Antriebsvorrichtung 7 mit einer elektrischen Antriebseinheit 5 vorgesehen, wobei die Bewegung über einen Übersetzungsmechanismus 6 auf die Schublade 4 übertragen wird. Aus Gründen einer günstigen Kraftübertragung ist der Übersetzungsmechanismus 6 mittig unterhalb des Schubladenbodens 4a angeordnet. Die Schublade 4 befindet sich in der gezeigten Figur in einer Offenstellung.

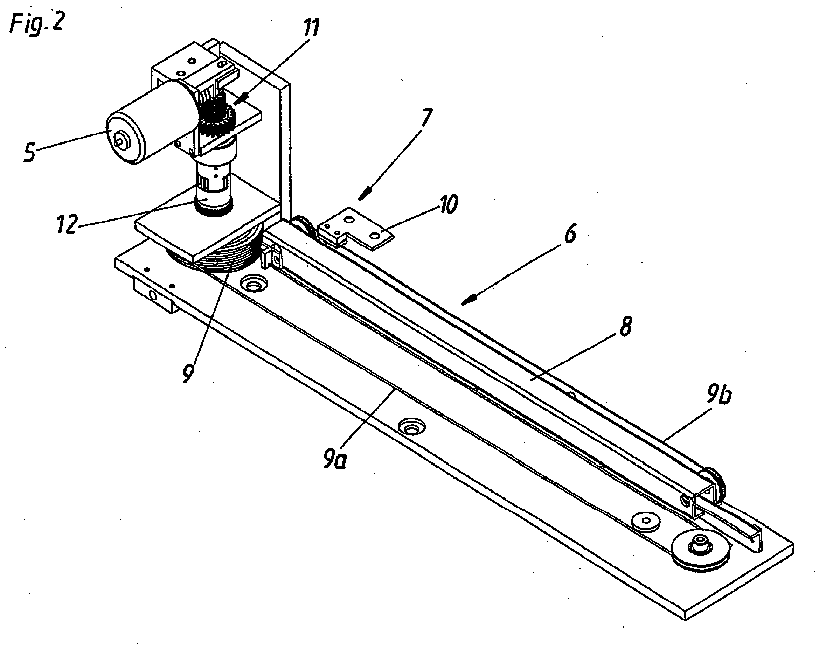

Fig. 2 zeigt eine schematische Perspektivdarstellung der in Fig. 1 gezeigten Antriebsvorrichtung 7. Diese umfasst eine elektrische Antriebseinheit 5, die über ein Getriebe 11 (vorzugsweise ein Winkelgetriebe) und eine Kupplungsvorrichtung 12 auf einen Seilantrieb wirkt. Der Übersetzungsmechanismus 6 umfasst eine Seilrolle 9, die über einen Seilzug 9a auf einen linear verschiebbaren Träger 8 wirkt. Durch die Bewegung des Trägers 8 wird eine zweite Seilrolle 9b gesteuert, die ein Beschlagteil 10 zur Befestigung an einem Schubladenboden 4a (Fig. 1) aufweist. Auf die nähere Ausbildung und Funktion des Übersetzungsmechanismus 6 wird nicht näher Bezug genommen. Erfindungswesentlich ist die Kupplungsvorrichtung 12, die zwischen der elektrischen Antriebseinheit 5 und dem bewegbaren Möbelteil 3 wirksam ist.

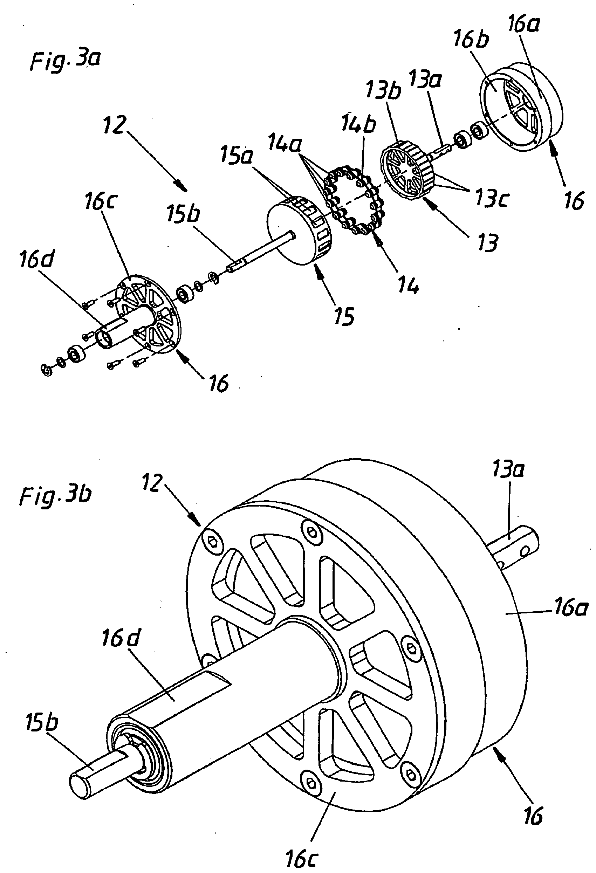

Fig. 3a zeigt eine Explosionsdarstellung der Kupplungsvorrichtung 12. Diese umfasst einen Antrieb 13 mit einer Antriebswelle 13a und einem daran angeformten Rotor 13b. Zu erkennen ist, dass der Rotor 13b an dessen Umfangsrand herum und im gleichen Umfangsabstand Vertiefungen 13c aufweist, die zur Aufnahme von Kupplungselementen 14a der Federmittel 14 vorgesehen sind. Die Kupplungselemente 14a sind vorzugsweise als Walzen oder Kugeln ausgeführt, die über ein geschlossenes elastisches Band 14b miteinander verbunden sind. Jedem Kupplungselement 14a ist eine Vertiefung 13c des Rotors 13 zugeordnet, d.h., dass jedes Kupplungselement 14a ist jeweils in einer ihr zugeordneten Vertiefung 13c bzw. an den zu beiden Seiten der Vertiefung 13c ansteigenden Schrägflächen angeordnet. In der gezeigten Figur sind zwei zueinander parallel verlaufende elastische Bänder 14b vorgesehen, die die Kupplungselemente 14a in der zweiten Betriebsstellung der Kupplungsvorrichtung 12 (d.h. bei "ausgeschaltener" Schaltstellung bzw. offener Kupplung) in die Vertiefungen 13c des Rotors 13b drücken. Ein zylindrischer Käfig 15 - der Teil einer Bremsvorrichtung zur Überwindung der Federkraft des elastischen Bandes 14b ist - weist eine Welle 15b auf, deren Umdrehung durch eine externe Vorrichtung gehemmt wird (z.B. Welle 15b schleift auf Gummipuffer oder auf einem Kugeldruckstück). Dabei kann es auch günstig sein, wenn die Bremskraft einstellbar ist, da diese den Schwellwert des Einkuppelns der Kupplungsvorrichtung 12 bestimmt. Durch die Maßnahme, dass die Welle 15b des Käfigs 15 immer leicht gebremst wird, erreicht man ein definiertes Einkuppelverhalten der Kupplungsvorrichtung 12. Zu erkennen ist, dass der Käfig 15 rechteckförmige Aussparungen 15a aufweist, in denen die walzenförmigen Kupplungselemente 14a ständig eingreifen. Wird die Kupplungsvorrichtung 12 geschlossen, d.h. durch Kraftschluss eingekuppelt, so werden die Kupplungselemente 14a zwischen dem Rotor 13b und dem Abtrieb 16 eingeklemmt. Der Abtrieb 16 ist zweiteilig ausgeführt und umfasst eine Trommel 16a, an deren Innenseite 16b der zylindrischen Außenwandung die Kupplungselemente 14a klemmend zur Anlage bringbar sind. Der zweite Teil des Abtriebs 16 ist die an der Trommel 16a anschraubbare Abdeckung 16c mit der eigentlichen Abtriebswelle 16d.

Fig. 3b zeigt eine perspektivische Darstellung der Kupplungsvorrichtung 12 im zusammengebauten Zustand. Zu erkennen ist die Antriebswelle 13a, die in den Abtrieb 16 mit der Trommel 16a und der Abdeckung 16c hineinreicht. Zu erkennen ist zudem die Welle 15b des Käfigs 15, die durch eine hier nicht näher dargestellte externe Bremsvorrichtung in ihrer Umdrehung gehemmt wird. Koaxial zur Antriebswelle 13a und Welle 15b des Käfigs 15 lagert die eigentliche Abtriebswelle 16d.

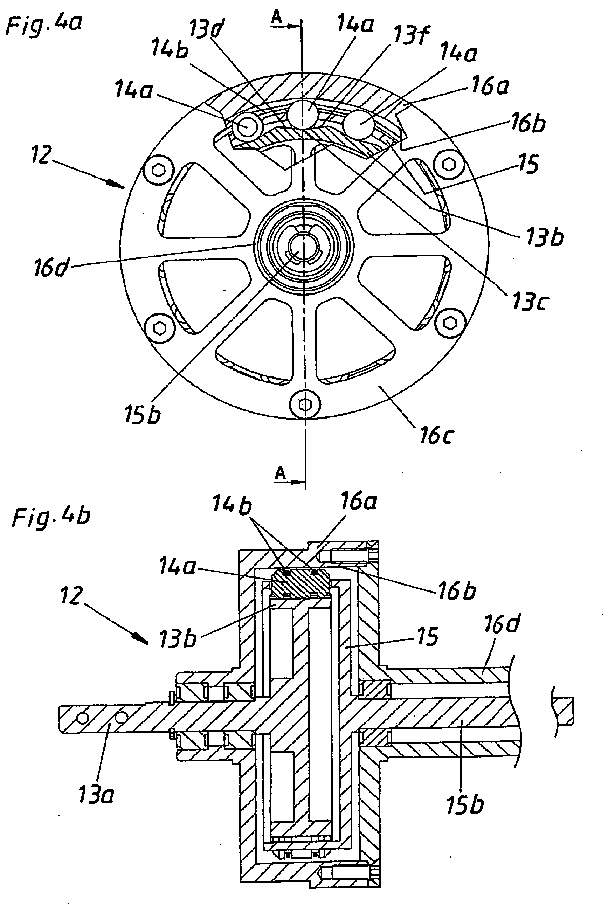

Fig. 4a zeigt eine teilweise aufgebrochene Frontansicht der ungekuppelten Kupplungsvorrichtung 12, sodass der Kraftstrang zwischen der elektrischen Antriebseinheit 5 und Abtriebswelle 16d unterbrochen ist. Fig. 4a zeigt die Kupplungsvorrichtung 12 von der Seite der Abtriebswelle 16d her gesehen. Von dieser Seite ist die Abdeckung 16c sowie die zu bremsende Welle 15b des Käfigs 15 ersichtlich. Im aufgebrochenen Detail ist der Antrieb 13 mit seinem Rotor 13b ersichtlich, an dessen Umfangsrand herum Vertiefungen 13c sowie auf beiden Seiten der Vertiefung 13c radial nach außen erstrekkende Schrägflächen 13d und 13f angeordnet sind. In der gezeigten Figur liegen die einzelnen Kupplungselemente 14a satt in den Vertiefungen 13c, sodass zwischen den Kupplungselementen 14a und der Innenseite 16b der zylindrischen Trommel 16a noch ein geringfügiger Spalt verbleibt, d.h., dass keine Kupplung zwischen Rotor 13b und der der Abtriebswelle 16d zugehörigen Trommel 16a stattfindet. Die Kupplungselemente 14a werden in der gezeigten Figur durch das elastische Band 14b in die Vertiefungen 13c gedrückt.

Fig. 4b zeigt die der Fig. 4a entsprechende Betriebsstellung (in der keine Kupplung stattfindet) in einem Vertikalschnitt entlang der Ebene A-A gemäß Fig. 4a. Zu erkennen ist die Antriebswelle 13a mit dem daran ausgebildeten Rotor 13b, der die Kupplungselemente 14a trägt. Die Kupplungselemente 14a werden durch die beiden elastischen Bänder 14b gegen die Umfangsfläche des Rotors 13b gedrückt. Zum Erreichen eines definierten Kupplungsverhaltens ab einem vorgegebenen Schwellwert ist der Käfig 15 vorgesehen, dessen Welle 15b in ihrer Umdrehung leicht gehemmt ist. Zu erkennen ist auch der zwischen dem Kupplungselement 14a und der Innenseite 16b der Trommel 16a verbleibende Spalt.

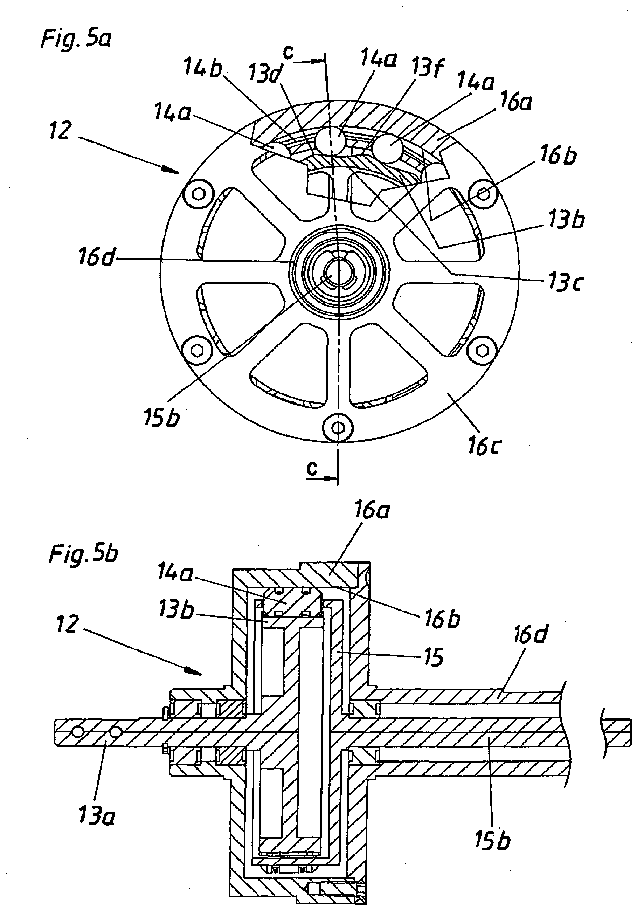

Fig. 5a zeigt die Kupplungsvorrichtung 12 im geschlossenen Zustand, d.h. es findet ein ununterbrochener Kraftstrang zwischen der elektrischen Antriebseinheit 5 (nicht gezeigt) und Abtriebswelle 16d statt. Zu erkennen ist, dass der Rotor 13b durch eine Bewegung der elektrischen Antriebseinheit 5 im Vergleich zu Fig. 4a und Fig. 4b geringfügig im Uhrzeigersinn verdreht wurde, woraufhin sofort eine kraftschlüssige Verbindung zwischen den Kupplungselementen 14a und der Innenseite 16b der Trommel 16a (die mit der Abtriebswelle 16d fest verbunden ist) herstellbar ist. Da der zylindrische Käfig 15 durch seine Welle 15b zur Kompensation der Federkraft des elastischen Bandes 14b ständig leicht gebremst wird, wird bei der kleinsten Drehbewegung des Rotors 13b unverzüglich eine Klemmverbindung hergestellt, nämlich durch die Schrägflächen 13d (von denen aus Gründen der Übersichtlichkeit nur eine gekennzeichnet ist), welche die Kupplungselemente 14a gegen die Innenseite 16b der Trommel 16a drücken. Bei umgekehrter Drehrichtung des elektrischen Antriebs 5 kommen entsprechend die Schrägflächen 13f zum Einsatz, die die Kupplungselemente 14a ebenfalls gegen die Innenseite 16b der Trommel 16a drücken. Kommt der elektrische Antrieb 5 zum Stillstand, so werden die Kupplungselemente 14a durch die Kraft des elastischen Bandes 14b sogleich wieder in die Vertiefungen 13c gedrückt, sodass keine Kupplung zwischen Antriebswelle 13a und Abtriebswelle 16d stattfindet.

Fig. 5b zeigt einen Vertikalschnitt entlang der Ebene C-C gemäß Fig. 5a mit geschlossener Kupplung. Zu erkennen ist, dass die Kupplungselemente 14a sowohl mit dem Rotor 13b als auch mit der Innenseite 16b der Trommel 16a der Abtriebswelle 16d verpresst sind.

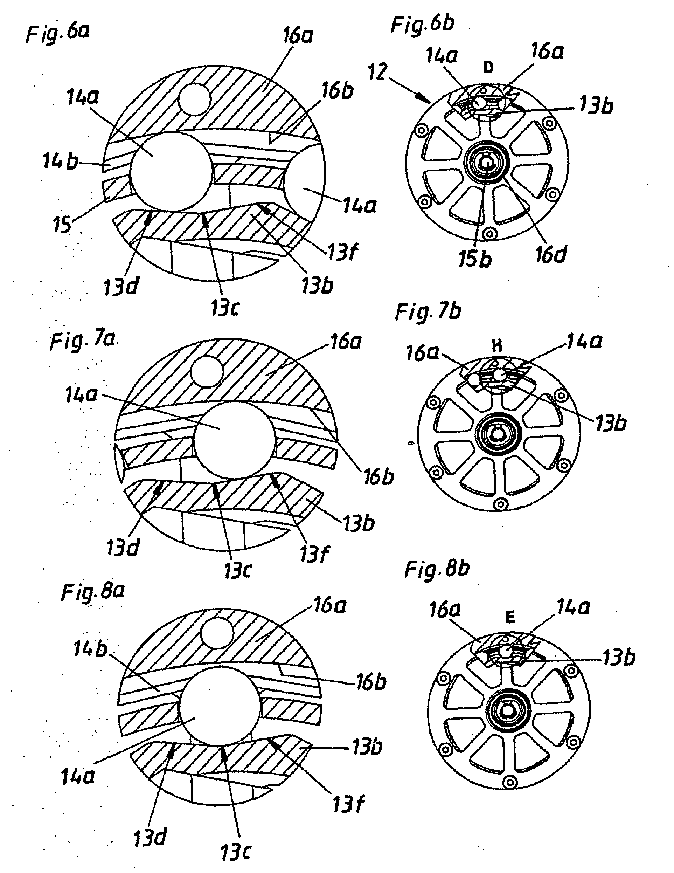

Fig. 6a und Fig. 6b veranschaulichen in einer Frontansicht (Fig. 6b) die Betriebsstellung der Kupplungsvorrichtung 12, in der der Rotor 13b im Uhrzeigersinn gedreht wurde, woraufhin eine Klemmverbindung zwischen Rotor 13b und Trommel 16a über die Kupplungselemente 14a herstellbar ist. Fig. 6a zeigt die Detailansicht des Kreises gemäß Fig. 6b in vergrößertem Maßstab. Aus Fig. 6a geht hervor, dass der Rotor 13b an dessen Umfangsrand Vertiefungen 13c mit jeweils angrenzenden Schrägflächen 13d und 13f aufweist, die in regelmäßigen Abständen um den gesamten Umfangsrand des Rotors 13b angeordnet sind. Zu erkennen ist auch der Käfig 15, der von den Kupplungselementen 14a durchsetzt ist, sowie das elastische Band 14b. Durch die Schrägflächen 13d werden die Kupplungselemente 14a gegen die Innenseite 16b der Trommel 16a gedrückt, wodurch der Kraftschluss hergestellt und die Kupplungsvorrichtung 12 geschlossen wird. Eine Besonderheit der Erfindung liegt nun darin, dass die Kupplungsvorrichtung 12 in diesem eingekuppelten Zustand - beispielsweise manuell - in die von der elektrischen Antriebseinheit 5 vorgegebenen Drehrichtung bewegbar ist, sofern die Abtriebswelle 16d (und damit die Trommel 16a) schneller als der Rotor 13b des Antriebs 13 bewegt wird. Bei einer schnelleren Bewegung der Trommel 16a - hervorgerufen durch eine unterstützende, manuelle Betätigung des bewegbaren Möbelteiles 4 - ist die Klemmverbindung zwischen den Kupplungselementen 14a und der Trommel 16a lösbar, da die Keilwirkung zwischen diesen beiden Bauteilen vorübergehend aufgehoben wird. Darüber hinaus ist der Kupplungsschluss ebenfalls aufhebbar, indem die elektrische Antriebseinheit 5 nach einem Stopp in eine Drehrichtung geringfügig in die entgegengesetzte Drehrichtung bewegt wird, woraufhin die Kupplungselemente 14a von dem elastischen Band 14b wieder in die Ausnehmung 13c gedrückt werden. Vorzugsweise liegt der Winkelbereich der entgegengesetzten Drehbewegung der elektrischen Antriebseinheit 5 zwischen 1° und 10°, vorzugsweise zwischen 2° und 6°.

Fig. 7a und Fig. 7b zeigen analoge Darstellungen gemäß Fig. 6a und Fig. 6b, wobei die elektrische Antriebseinheit 5 und damit der Rotor 13b im Gegenuhrzeigersinn verdreht wurden. Die Klemmverbindung wird dabei zwischen der anderen Schrägflächen 13f über die Klemmelemente 14a und der Innenseite 16b der Trommel 16a hergestellt. Auch hier lässt sich der Klemmschluss vorübergehend lösen, indem die Trommel 16a durch eine zusätzliche unterstützende (z.B. manuelle) Bewegung im Gegenuhrzeigersinn schneller als der Rotor 13b bewegt wird.

Fig. 8a zeigt den Stillstand des elektrischen Antriebs 5 und damit des Rotors 13b, wobei die Kupplungselemente 14a vom elastischen Band 14b in die Ausnehmungen 13c gedrückt werden. Zu erkennen ist der Spalt zwischen dem Kupplungselement 14a und der Innenseite 16b der Trommel 16a, sodass die Kupplung somit offen ist. In dieser Betriebsstellung kann das bewegbare Möbelteil 4 innerhalb seiner Endlagen frei bewegt werden.

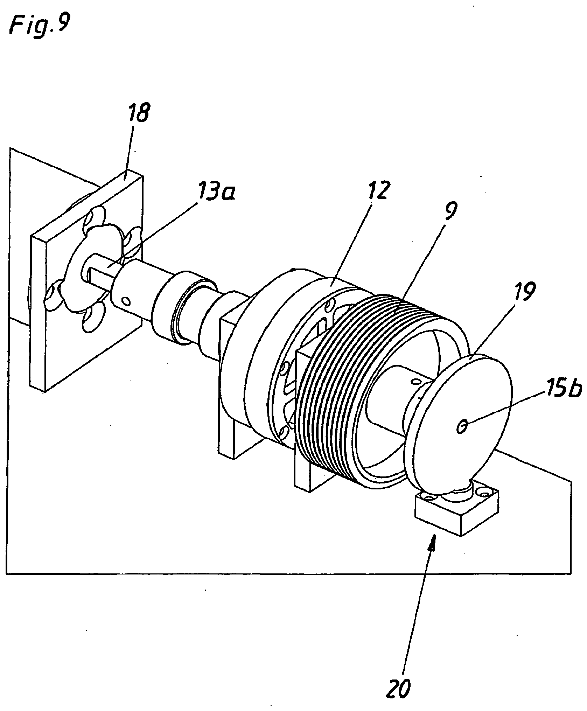

Fig. 9 zeigt schematisch ein Ausführungsbeispiel zur Hemmung der Drehbewegung der Welle 15b, die an dem im Inneren der Kupplungsvorrichtung 12 angeordneten zylindrischen Käfig 15 ausgebildet ist. Zur Erreichung eines definierten Einkuppelns ab einem vorgegebenen oder vorgebbaren Schwellwert wird an der Welle 15b eine Bremsscheibe 19 befestigt, die auf einer Bremsvorrichtung 20 in ihrer Drehbewegung geringfügig gehemmt wird. Die Bremsvorrichtung 20 kann dabei beispielsweise einen Gummipuffer oder ein Kugeldruckstück aufweisen, an der die Bremsscheibe 19 schleift. Mit dem Bezugszeichen 18 ist ein Motorgehäuse gekennzeichnet, in welches die Antriebswelle 13a einsetzbar ist.

Die vorliegende Erfindung beschränkt sich nicht auf das gezeigte Ausführungsbeispiel, sondern umfasst bzw. erstreckt sich auf alle Varianten und technischen Äquivalente, die in die Reichweite der nachfolgenden Ansprüche fallen können. Auch sind die in der Beschreibung gewählten Lageangaben, wie z.B. oben, unten, seitlich usw. auf die übliche Einbaulage der Antriebsvorrichtung 7 sowie auf die unmittelbar beschriebene sowie dargestellte Figur bezogen und sind bei einer Lageänderung sinngemäß auf die neue Lage zu übertragen. Die Kupplungselemente 14a sind vorzugsweise aus Metall hergestellt.

## Patentansprüche

1. Möbel mit einer Antriebsvorrichtung für bewegbare Möbelteile mit einer elektrischen Antriebseinheit und einer Kupplungsvorrichtung zur zumindest zeitweiligen Übertragung der Kraft der elektrischen Antriebseinheit auf das bewegbare Möbelteil, wobei die Kupplungsvorrichtung einen Antrieb und einen Abtrieb aufweist, und zwischen dem Antrieb (13) und dem Abtrieb (16) Kupplungselemente (14a) wirksam sind, **dadurch gekennzeichnet, dass** durch die Kupplungselemente in einer ersten Betriebsstellung eine Klemmverbindung zwischen Antrieb (13) und Abtrieb (16) und damit eine Kupplung derselben herstellbar ist und die Kupplungselemente in einer zweiten Betriebsstellung durch Federmittel (14) in eine separate Lage bewegbar sind, in der der Antrieb (13) und der Abtrieb (16) nicht durch die Kupplungselemente kuppelbar sind, wobei der Antrieb (13) einen Rotor (13b) aufweist, an dessen Umfangsrand herum Vertiefungen (13c) zur Aufnahme der Kupplungselemente (14a) vorgesehen sind, die Federmittel (14) wenigstens ein um den Rotor (13b) verlaufendes, vorzugsweise geschlossenes, elastisches Band (14b) aufweisen und die Kupplungselemente, wenn die elektrische Antriebseinheit (5) zum Stillstand kommt, durch die Kraft des elastischen Bands in die Vertiefungen (13c) drückbar sind.

2. Möbel nach Anspruch 1, **dadurch gekennzeichnet, dass** der Antrieb (13) und der Abtrieb (16) relativ zueinander verdrehbar und vorzugsweise zueinander koaxial angeordnet sind.

3. Möbel nach Anspruch 1 oder 2, **dadurch gekennzeichnet, dass** die Vertiefungen (13c) im Wesentlichen im gleichen Umfangsabstand des Rotors (13b) herum angeordnet sind.

4. Möbel nach einem der Ansprüche 1 bis 3, **dadurch gekennzeichnet, dass** die Kupplungselemente (14a) in der ersten Betriebsstellung an Schrägflächen (13d, 13f) der Vertiefungen (13c) des Rotors (13b) zur Anlage bringbar sind, wobei die Kupplungselemente (14a) sowohl mit dem Antrieb (13) als auch mit dem Abtrieb (16), vorzugsweise einer daran angeordneten oder ausgebildeten Trommel (16a), kraftschlüssig in Verbindung stehen.

5. Möbel nach einem der Ansprüche 1 bis 4, **dadurch gekennzeichnet, dass** die Klemmverbindung zwischen Antrieb (13) und Abtrieb (16) durch eine - in Richtung der von der Antriebseinheit (5) ausgeübten Drehrichtung, beispielsweise manuelle - Betätigung des Abtriebs (16) lösbar ist.

6. Möbel nach Anspruch 4 oder 5, **dadurch gekennzeichnet, dass** die Trommel (16a) im Wesentlichen zylindrisch ausgebildet ist, wobei die Kupplungselemente (14a) an der Innenseite (16b) einer Außenwandung der Trommel (16a) zur Anlage bringbar sind.

7. Möbel nach einem der Ansprüche 1 bis 6, **dadurch gekennzeichnet, dass** zwischen dem Antrieb (13) und dem Abtrieb (16) eine Bremsvorrichtung (20) mit vorgegebener oder vorgebbarer Bremskraft wirksam ist.

8. Möbel nach Anspruch 7, **dadurch gekennzeichnet, dass** die Bremsvorrichtung (20) einen vorzugsweise zylindrischen Käfig (15) mit einer daran ausgebildeten Welle (15b) aufweist, die in ihrer Umdrehung gehemmt ist.

9. Möbel nach Anspruch 8, **dadurch gekennzeichnet, dass** der zylindrische Käfig (15) Aussparungen (15a) aufweist, in denen die Kupplungselemente (14a) eingreifen.

10. Möbel nach Anspruch 8 oder 9, **dadurch gekennzeichnet, dass** der Käfig (15) zwischen den Kupplungselementen (14a) und der Trommel (16a) des Abtriebs (16) angeordnet ist.

11. Möbel nach einem der Ansprüche 1 bis 10, **dadurch gekennzeichnet, dass** die Kupplungselemente (14a) als Walzen oder als Kugeln ausgebildet sind.

12. Möbel nach einem der Ansprüche 1 bis 11, **dadurch gekennzeichnet, dass** die Antriebseinheit (5) wenigstens einen elektrischen Motor umfasst.

13. Möbel nach Anspruch 12, **dadurch gekennzeichnet, dass** der elektrische Motor in vorzugsweise zwei Drehrichtungen schaltbar ist.

14. Möbel nach Anspruch 13, **dadurch gekennzeichnet, dass** der elektrische Motor nach einem Stopp in einer Drehrichtung innerhalb eines vorgegebenen Winkelbereiches selbsttätig in die entgegen gesetzte Drehrichtung bewegbar ist.

15. Möbel nach Anspruch 14, **dadurch gekennzeichnet, dass** der Winkelbereich zwischen 1° und 10°, vorzugsweise zwischen 2° und 6°, liegt.

16. Möbel mit einer Antriebsvorrichtung für bewegbare Möbelteile mit einer vorzugsweise elektrischen Antriebseinheit und einer Kupplungsvorrichtung zur zumindest zeitweiligen Übertragung der Kraft der elektrischen Antriebseinheit auf das bewegbare Möbelteil, wobei die Kupplungsvorrichtung einen Antrieb und einen Abtrieb nach einem der Ansprüche 1 bis 15 aufweist, **dadurch gekennzeichnet, dass** in beiden Drehrichtungen der elektrischen Antriebseinheit (5) durch die Kupplungsvorrichtung (12) automatisch eine mechanische Kupplung zwischen Antrieb (13) und Abtrieb (16) herstellbar ist.

17. Möbel nach Anspruch 16, **dadurch gekennzeichnet, dass** der Abtrieb (16) ausgehend von einem ausgekuppelten Zustand zwischen Antrieb (13) und Abtrieb (16) in beiden Drehrichtungen frei bewegbar ist.

18. Möbel nach Anspruch 16 oder 17, **dadurch gekennzeichnet, dass** der Abtrieb (16) ausgehend von einem eingekuppelten Zustand zwischen Antrieb (13) und Abtrieb (16)-beispielsweise manuell - in eine in Richtung der von der Antriebseinheit (5) ausgeübten Drehrichtung bewegbar ist, sofern der Abtrieb (16) rascher als der Antrieb (13) bewegt ist.

## Claims

1. An article of furniture having a drive device for movable furniture parts, with an electric drive unit and with a coupling device for at least temporarily transmitting the force of the electric drive unit to the movable furniture part, wherein the coupling device has a drive and a drive output and operative between the drive (13) and the drive output (16) are coupling elements (14a), **characterized in that** by means of the coupling elements a clamping connection and thus coupling between the drive (13) and the drive output (16) can be produced in a first operating position, and the coupling elements in a second operating position can be moved by spring means (14) into a separate position in which the drive (13) and the drive output (16) cannot be coupled by the coupling elements, wherein the drive (13) comprises a rotor (13b) with recesses (13c) arranged on a peripheral surface thereof, wherein the recesses (13c) are provided for accommodating the coupling elements (14a), the spring means (14) comprise at least one, preferably closed, elastic band (14b) which extends around the rotor (13b) and the coupling elements - if the drive unit (5) stops - can be pressed into the recesses (13c) by the power of the elastic band.

2. The article of furniture according to claim 1, **characterised in that** the drive (13) and the drive output (16) are pivotable relative to each other and are preferably arranged coaxially to each other.

3. The article of furniture according to claim 1 or 2, **characterised in that** the recesses (13c) are arranged substantially at equal peripheral spacings around the rotor (13b).

4. The article of furniture according to one of the claims 1 to 3, **characterised in that** in the first operating position, the coupling elements (14a) can be brought into engagement with inclined surfaces (13d, 13f) of the recesses (13c) of the rotor (13b), wherein the coupling elements (14a) are force-lockingly connected both with the drive (13) and also with the drive output (16), preferably with a drum (16a) arranged or formed thereon.

5. The article of furniture according to one of the claims 1 to 4, **characterised in that** the clamping connection between the drive (13) and the drive output (16) is releasable by - for example a manual - actuation of the drive output (16) in a direction being determined by the rotational direction of the drive unit (5).

6. The article of furniture according to claim 4 or 5, **characterised in that** the drum (16a) is of a substantially cylindrical configuration, wherein the coupling elements (14a) can be brought into engagement with an outside surface of the drum (16a).

7. The article of furniture according to one of the claims 1 to 6, **characterised in that** a braking device (20) with a predetermined or a pre-settable braking force is operative between the drive (13) and drive output (16).

8. The article of furniture according to claim 7, **characterised in that** the braking device (20) comprises a - preferably cylindrical - cage (15) with a shaft (15b) formed thereon, wherein the shaft (15b) is restrained in its rotation.

9. The article of furniture according to claim 8, **characterised in that** the cylindrical cage (15) has openings (15a) in which the coupling elements (14a) engage.

10. The article of furniture according to claim 8 or 9, **characterised in that** the cage (15) is arranged between the coupling elements (14a) and the drum (16a) of the drive output (16).

11. The article of furniture according to one of the claims 1 to 10, **characterised in that** the coupling elements (15a) are in the form of rollers or balls.

12. The article of furniture according to one of the claims 1 to 11, **characterised in that** the drive unit (5) comprises at least one electric motor.

13. The article of furniture according claim 12, **characterised in that** the electric motor can be switched in preferably two rotating directions.

14. The article of furniture according claim 13, **characterised in that** after a stop in one rotating direction, the electric motor is automatically movable towards the opposite rotating direction within a predetermined angular range.

15. The article of furniture according to claim 14, **characterised in that** the angular range is between 1° and 10°, preferably between 2° and 6°.

16. The article of furniture having a drive device (7) for movable furniture parts (3), with a - preferably electric - drive unit (5) and with a coupling device (12) for at least temporarily transmitting the force of the electric drive unit (5) to the movable furniture part (3), wherein the coupling device (12) has a drive (13) and a drive output (16) according to one of the claims 1 to 15, **characterised in that** the coupling device (12) can provide a mechanical coupling between the drive (13) and the drive output (16) in both rotating directions of the electric drive (5),

17. The article of furniture according to claim 16, **characterised in that** the drive output (16) is freely movable in both rotating directions starting from an uncoupled condition between the drive (13) and the drive output (16).

18. The article of furniture according to claim 16 or 17, **characterised in that** the drive output (16), starting from a coupled condition between the drive (13) and the drive output (16), is movable - for example manually - in a rotating direction being determined by the rotating direction of drive unit (5), if the drive output (16) is moved faster than the drive (13).

## Revendications

1. Meuble avec un dispositif d'entraînement pour des parties de meuble mobiles, avec une unité d'entraînement électrique et un dispositif d'accouplement pour la transmission au moins temporaire de la force de l'unité d'entraînement électrique à la partie de meuble mobile, le dispositif d'accouplement présentant un mécanisme d'entraînement d'entrée et un mécanisme d'entraînement de sortie et des éléments d'accouplement (14a) étant actifs entre le mécanisme d'entraînement d'entrée (13) et le mécanisme d'entraînement de sortie (16), les premiers **caractérisés en ce que** par les éléments d'accouplement dans une première position de fonctionnement, un assemblage serré peut être réalisé entre le mécanisme d'entraînement d'entrée (13) et le mécanisme d'entraînement de sortie (16), et donc un accouplement de ceux-ci, et que les éléments d'accouplement, dans une deuxième position de fonctionnement - par des moyens de ressort (14) - peuvent être déplacés dans une situation séparée dans laquelle le mécanisme d'entraînement d'entrée (13) et le mécanisme d'entraînement de sortie (16) ne peuvent pas être accouplés par les éléments d'accouplement, le mécanisme d'entraînement d'entrée (13) présentant un rotor (13b), sur le bord périphérique duquel des creux (13c) sont prévus pour recevoir les éléments d'accouplement (14a), les moyens de ressort (14) présentant au moins un ruban élastique (14b), de préférence fermé, disposé autour du rotor (13b), et les éléments d'accouplement (14a) pouvant être pressés dans les creux (13c) par la force du ruban élastique, si l'unité d'entraînement (5) électrique s'arrête.

2. Meuble selon la revendication 1, **caractérisé en ce que** le mécanisme d'entraînement d'entrée (13) et le mécanisme d'entraînement de sortie (16) peuvent être tordus l'un par rapport à l'autre et sont de préférence disposés de façon coaxiale l'un par rapport à l'autre.

3. Meuble selon la revendication 1 ou 2, **caractérisé en ce que** les creux (13c) sont disposés essentiellement de façon régulièrement espacée tout autour du rotor (13b).

4. Meuble selon une des revendications 1 à 3, **caractérisé en ce que** les éléments d'accouplement (14a), dans la première position de fonctionnement, peuvent être amenés à appuyer contre des surfaces obliques (13d, 13f) des creux (13c) du rotor (13b), les éléments d'accouplement (14a) étant raccordés par friction aussi bien au mécanisme d'entraînement d'entrée (13) qu'au mécanisme d'entraînement de sortie (16), de préférence un tambour (16a) qui y est disposé ou constitué.

5. Meuble selon une des revendications 1 à 4, **caractérisé en ce que** l'assemblage serré entre le mécanisme d'entraînement d'entrée (13) et le mécanisme d'entraînement de sortie (16) peut être détaché par un actionnement, par exemple manuel, du mécanisme d'entraînement de sortie (16) en direction du sens de rotation exercé par l'unité d'entraînement (5).

6. Meuble selon la revendication 4 ou la revendication 5, **caractérisé en ce que** le tambour (16a) est essentiellement constitué de façon cylindrique, les éléments d'accouplement (14a) pouvant être amenés à appuyer contre le côté intérieur (16b) d'une paroi extérieure du tambour (16a).

7. Meuble selon une des revendications 1 à 6, **caractérisé en ce que**, entre le mécanisme d'entraînement d'entrée (13) et le mécanisme d'entraînement de sortie (16), un dispositif de freinage (20) est actif avec une force de freinage paramétrée ou paramétrable.

8. Meuble selon la revendication 7, **caractérisé en ce que** le dispositif de freinage (20) présente une cage (15), de préférence cylindrique, avec un arbre (15b) qui est constitué sur elle et qui est bloqué en rotation.

9. Meuble selon la revendication 8, **caractérisé en ce que** la cage (15) cylindrique présente des évidements (15a) dans lesquels les éléments d'accouplement (14a) engrènent.

10. Meuble selon la revendication 8 ou la revendication 9, **caractérisé en ce que** la cage (15) est disposée entre les éléments d'accouplement (14a) et le tambour (16a) du mécanisme d'entraînement de sortie (16).

11. Meuble selon une des revendications 1 à 10, **caractérisé en ce que** les éléments d'accouplement (14a) sont constitués en tant que rouleaux ou en tant que billes.

12. Meuble selon une des revendications 1 à 11, **caractérisé en ce que** l'unité d'entraînement (5) comprend au moins un moteur électrique.

13. Meuble selon la revendication 12, **caractérisé en ce que** le moteur électrique peut être commuté de préférence dans deux sens de rotation.

14. Meuble selon la revendication 13, **caractérisé en ce que** le moteur électrique, après un arrêt dans un sens de rotation, peut être automatiquement déplacé dans le sens de rotation opposé à l'intérieur d'une plage angulaire prédéterminée.

15. Meuble selon la revendication 14, **caractérisé en ce que** la plage angulaire s'étend de 1° à 10°, de préférence de 2° à 6°.

16. Meuble avec un dispositif d'entraînement pour des parties de meuble mobiles avec une unité d'entraînement de préférence électrique et un dispositif d'accouplement pour la transmission au moins temporaire de la force de l'unité d'entraînement électrique à la partie de meuble mobile, le dispositif d'accouplement présentant un mécanisme d'entraînement d'entrée et un mécanisme d'entraînement de sortie selon une des revendications 1 à 15, **caractérisé en ce que**, dans les deux sens de rotation de l'unité d'entraînement (5) électrique, un accouplement mécanique entre le mécanisme d'entraînement d'entrée (13) et le mécanisme d'entraînement de sortie (16) peut être réalisé automatiquement par le dispositif d'accouplement (12).

17. Meuble selon la revendication 16, **caractérisé en ce que** le mécanisme d'entraînement de sortie (16) peut être déplacé librement dans les deux sens de rotation en partant d'un état désaccouplé entre le mécanisme d'entraînement d'entrée (13) et le mécanisme d'entraînement de sortie (16).

18. Meuble selon la revendication 16 ou 17, **caractérisé en ce que** le mécanisme d'entraînement de sortie (16), en partant d'un état accouplé entre le mécanisme d'entraînement d'entrée (13) et le mécanisme d'entraînement de sortie (16), peut être déplacé - par exemple manuellement - dans une direction du sens de rotation exercé par l'unité d'entraînement (5) tant que le mécanisme d'entraînement de sortie (16) est déplacé plus rapidement que le mécanisme d'entraînement d'entrée (13).
